# EUROPEAN PATENT APPLICATION

(11) **EP 2 538 188 A1**
(43) Date of publication of application: **26.12.2012**
(21) Application number: 11744755.7
(22) Date of filing: 18.02.2011
(51) Int. Cl.: G01J 5/08

(54) **MIRROR FOR TEMPERATURE MEASUREMENT AND MIRROR STRUCTURE**

(30) Priority: 18.02.2010 JP 2010033738
(71) Applicant: Ogawa, Hidekazu, Hyogo 653-0836 (JP)
(72) Inventor: CHIJIMATSU, Yoshihiro, Kobe-shi Hyogo 652-0812 (JP); OGAWA, Hidekazu, Kobe-shi Hyogo 653-0836 (JP)
(74) Representative: Hinkelmann, Klaus
(86) International application number: PCT/JP2011/053523
(87) International publication number: WO 2011/102469

(57) **Abstract**

[Purpose] Provided is a novel mirror capable of measuring the temperature of an object in a state that the field of view of a radiation thermometer is accurately directed toward the object, and a mirror structure.

[Constitution] A temperature of an object located in front of a mirror is measured by a radiation thermometer while reflecting a mirror image of the object located in front of the mirror on a mirror surface of the mirror in a state that the mirror image includes a portion corresponding to a field of view of the radiation thermometer.

## Description

### TECHNICAL FIELD

The present invention relates to a mirror for measuring the temperature of an object using a radiation thermometer while reflecting the object onto the mirror and a mirror structure.

### BACKGROUND ART

Recently, a radiation thermometer, such as an infrared radiation thermometer, has been developed to measure the temperature of an object by detecting an infrared ray radiated from the object. The radiation thermometer has the advantage of instantly measuring the temperature of the object by simply setting the field of view of the radiation thermometer toward the object.

Such a radiation thermometer is mainly classified into a contact type radiation thermometer and a non-contact type radiation thermometer. For instance, the contact type radiation thermometer detects the infrared ray radiated in the vicinity of an eardrum by inserting a probe into an external auditory meatus (see, patent documents 1 and 2).

Meanwhile, the non-contact type radiation thermometer detects the infrared ray radiated from a region corresponding to the field of view by setting the field of view toward a forehead, a cheek or a mouth (see, patent document 3).

### CITED REFERENCE

### PATENT DOCUMENTS

Patent Document 1: Japanese Examined Patent Publication No. Hei 6-63851
Patent Document 2: Japanese Examined Patent Publication No. Hei 8-16629
Patent Document 3: Japanese Unexamined Patent Publication No. Hei 9-145483

### DISCLOSURE OF THE INVENTION

### TECHNICAL PROBLEM

According to the contact type radiation thermometer, the field of view is induced toward the eardrum by inserting a probe into an external auditory meatus upon the temperature measurement, so a user can measure the temperature without being aware of the field of view. However, there is a problem of infection because many unspecified persons may use the contact type radiation thermometer, so many persons are reluctant to use the contact type radiation thermometer for sanitary reasons.

Meanwhile, the non-contact type radiation thermometer measures the temperature without making contact with the object, so the non-contact type radiation thermometer is advantageous in view of sanitation. However, the field of view of the radiation thermometer may be visually recognized, so it is difficult to confirm whether the field of view is accurately directed to the object upon the temperature measurement.

To solve the above problem, there has been developed a radiation thermometer, in which induction light is irradiated according to the field of view of the radiation thermometer and projected onto a surface of an object such that the direction of the field of view can be visually recognized.

The radiation thermometer having the function of irradiating the induction light may be conveniently used when the induction light projected onto the object can be readily recognized, for instance, when a user measures the body temperature of others using the infrared radiation thermometer. However, when the user measures the temperature of the object positioned out of the field of view of the user, for instance, when the user measures the temperature of a face of the user, such as a forehead or a cheek of the user, the direction of the field of view may not be recognized because the induction light projected onto the object is out of the field of view.

The present invention has been made in consideration of the above situations and it is an object of the present invention to provide a novel mirror capable of measuring the temperature of an object in a state that the field of view of a radiation thermometer is accurately directed toward the object, and a mirror structure.

### MEANS FOR SOLVING THE PROBLEM

A mirror according to the present invention includes a radiation thermometer for measuring a temperature of an object, wherein the mirror reflects a mirror image of the object located in front of the mirror on a mirror surface of the mirror in a state that the mirror image includes a portion corresponding to a field of view of the radiation thermometer, the radiation thermometer has the field of view directed to the object located in front of the mirror, and the temperature of the object is measured while reflecting the object on the mirror.

In the present invention, "mirror" represents a tool that shows an appearance and a shape of an object based on the principle of reflection of visible ray. That is, mirror used as a mirror for measuring the temperature according to the present invention may include various types of mirror products generally available from markets without specific limitation of the size, the shape or the type of products. For instance, the mirror products may include a wall mirror, a stand mirror, a dresser, a dressing stand, a three-folded mirror, a full-length mirror, a hand mirror, a room mirror of a vehicle or a cosmetic mirror.

Meanwhile, "radiation thermometer" provided in the mirror according to the present invention may not be specially limited if the radiation thermometer can measure the temperature of a portion corresponding to the field of view in a non-contact state. According to the mirror for measuring the temperature of the present invention, an infrared radiation thermometer, which detects the amount of energy radiated from the object as temperature information, is preferably used as the radiation thermometer.

According to the mirror for measuring the temperature of the present invention, the mirror reflects a mirror image of the object located in front of the mirror on a mirror surface of the mirror in a state that the mirror image includes a portion corresponding to the field of view of the radiation thermometer, and the radiation thermometer has the field of view directed to the object located in front of the mirror.

That is, the mirror for measuring the temperature according to the present invention measures the temperature of the object using the radiation thermometer while reflecting the object on the mirror. If the mirror image of the object is reflected on the mirror surface, the field of view of the radiation thermometer may be directed to the object. Thus, when the user measures the temperature of the object positioned out of the field of view of the user, in detail, when the user measures the temperature of a face of the user, such as a forehead or a cheek of the user, the user can measure the temperature in a state that the field of view of the radiation thermometer is accurately directed to the object.

Preferably, the mirror for measuring the temperature according to the present invention includes an induction light irradiation device for irradiating induction light in the direction of the field of view of the radiation thermometer.

That is, the mirror for measuring the temperature according to the present invention reflects the mirror image of the object located in front of the mirror on the mirror surface of the mirror in a state that the mirror image includes a portion corresponding to the field of view of the radiation thermometer, so, if the mirror includes the induction light irradiation device for irradiating induction light in the direction of the field of view of the radiation thermometer, the mirror image including a portion of the object to which the induction light is projected can be reflected on the mirror surface. Therefore, when the user measures the temperature of the object located out of the field of view of the user, the user can recognize the field of view of the radiation thermometer based on the mirror image to which the induction light is projected.

Various types of induction light irradiation devices can be used without limitation if they can irradiate the induction light having the wavelength of the visible ray band and can temporally or continuously project a spot, which represents the central portion or the range of the field of view of the radiation thermometer, on the surface of the object. In detail, a laser pointer can be used as the induction light irradiation device.

Meanwhile, the body temperature of a human may slightly vary depending on parts of the body. Thus, it is preferred to measure the body temperature from the same part of the body when accumulating the variation of the body temperature of the human as data.

Therefore, according to the mirror for measuring the temperature of the present invention, preferably, a mark serving as a reference of the field of view of the radiation thermometer is temporally or permanently formed on the mirror surface.

That is, according to the mirror for measuring the temperature of the present invention, a figure representing the central portion or the range of the field of view or an outline representing the range of the object to be reflected is formed on the mirror surface as a mark serving as a reference for the field of view. Thus, the object can be readily reflected on the almost same position of the mirror surface based on the mark, so the temperature can be measured from the almost same position of the object.

The means for temporally or permanently forming the mark on the mirror surface may not be specially limited. For instance, the mark can be directly formed on the mirror surface by means of paint, sand blast or photo blast. In addition, the mirror surface may be partially or fully formed with a liquid crystal display in the form of a magic mirror such that the mark can be displayed on the mirror surface through the on-off operation of a backlight unit.

According to the mirror for measuring the temperature of the present invention, the radiation thermometer is provided in the mirror in such a manner that the direction of the field of view of the radiation thermometer may be changeable.

That is, if the mirror for measuring the temperature according to the present invention is prepared as a fixed mirror, such as a wall mirror used for a plurality of users, the field of view of the radiation thermometer may deviate from the field of view of the user depending on the physique of the user.

In this regard, according to the mirror for measuring the temperature of the present invention, the radiation thermometer is provided in the mirror such that the direction of the field of view of the radiation thermometer can be changed, so the temperature measurement based on the physique of the user may be possible.

The means for installing the radiation thermometer in the mirror such that the direction of the field of view of the radiation thermometer can be changed may not be specially limited. For instance, the radiation thermometer may be installed in the mirror by means of a rotating shaft or a set of male-female fitting members such that the radiation thermometer may rotate relative to the mirror. The direction of the field of view may be manually changed or may be mechanically changed by a driving device, such as a motor. In addition, the command for changing the direction of the field of view may be supplied through the remote control mechanism in wired or wireless manner. Further, memory devices that store a plurality of fields of view, which are different from each other, may be installed such that the field of view of the radiation thermometer can be directed to each user through the manipulation of buttons.

In addition, when changing the field of view of the radiation thermometer, preferably, the direction of the induction light irradiation device or the position of the mark formed on the mirror surface as the reference of the field of view is properly changed.

Preferably, the mirror for measuring the temperature according to the present invention may include a measured temperature recording unit for recording the temperature measured by the radiation thermometer.

That is, if the temperature measured by the mirror according to the present invention is recorded and, for example, accumulated as data of the body temperature, the variation of the body temperature may be recognized based on the accumulated data of the body temperature, so the present status of health can be grasped.

The measured temperature recording unit may not be specially limited if it can record the measured temperature. In detail, for example, a main memory device, such as RAM, or an electronic medium, such as a memory card or a USB memory, may be used as the measured temperature recording unit. The measured temperature recording unit can be directly installed in the mirror for measuring the temperature according to the present invention. In addition, it is possible to transmit information about the measured temperature to a device, such as a separate computer connected through wired or wireless manner, such that the information can be recorded in the main memory device or the electronic medium of the computer. Further, the measured temperature of each object may be recorded by manipulating a button, and the measurement date may be recorded together with measured temperature.

Preferably, the mirror for measuring the temperature according to the present invention may include a measured temperature displaying unit for displaying the temperature measured by the radiation thermometer.

That is, the temperature measured by the mirror for measuring the temperature according to the present invention may be recorded in the measured temperature recording unit without being displayed upon the temperature measurement, but it is preferred to display the measured temperature in the region corresponding to the field of view of the user such that the user can visually check the measured temperature.

The measured temperature displaying unit may not be specially limited if it can temporally or continuously display the measured temperature in the region corresponding to the field of view of the user. In detail, for example, a display screen for displaying the measured temperature may be provided in the mirror or on the rim of the mirror. In addition, the mirror surface may be partially or fully formed with a liquid crystal display in the form of a magic mirror such that the measured temperature can be displayed on the mirror surface through the on-off operation of a backlight unit.

Preferably, the mirror for measuring the temperature according to the present invention includes a notifying device, which generates a signal when the temperature measured by the radiation thermometer is higher or less than a predetermined temperature range, which is set as a reference temperature.

That is, for example, the body temperature of the human is normally controlled at the temperature of 36°C to 37°C by the Thermoregulatory Center's. If the body temperature is excessively high or low, it may affect an influence upon the vital activity.

Thus, after setting the reference temperature in the range of 36°C to 37°C, if the temperature measured by the radiation thermometer is out of the above range, the notifying device generates an alarm signal (sound, light, vibration or message) to allow the user to make attention to the unconscious deterioration of the health, to find the disease in early stage and to recover the health.

The mirror for measuring the temperature according to the present invention may measure the temperature of the object using the radiation thermometer while reflecting the object on the mirror. The temperature measurement by the radiation thermometer may be performed continuously.

However, it may be meaningless if the temperature measurement is performed although there is no object in front of the mirror. In addition, it is preferred to stop the temperature measurement in terms of energy save if there is no object in front of the mirror. In detail, it is preferred to stop the display of the temperature, the display of the mark serving as the reference of the field of view, and the irradiation of the induction light, if there is no object in front of the mirror because it may unnecessarily cause the power consumption.

The user may execute/stop the temperature measurement by manipulating a switch or a button. In particular, the mirror for measuring the temperature according to the present invention may include a detecting device, such as a sensor for detecting sound, light, heat or vibration. Preferably, if the detecting device detects the object located in front of the mirror, the command is generated to start the temperature measurement by the radiation thermometer, the display of the temperature, the display of the mark serving as the reference of the field of view, or the irradiation of the induction light. In this case, the radiation thermometer itself may have the function of the temperature sensor serving as the detecting device.

In addition, electric energy may be suitably used as a power source of the mirror for measuring the temperature according to the present invention. The electric energy may be supplied from a household wall outlet or a battery. In addition, a solar cell panel may be provided to supply the electric energy by converting light energy into the electric energy.

According to the mirror for measuring the temperature of the present invention, the object mainly refers to a human, but it is not exclusively limited to the human. In some cases, the object may refer to an animal, such as a livestock or a pet, an inner wall of a house or other things. In this case, since the infrared ray radiated from the object may vary depending on the feature and the surface configuration of the object, the temperature must be measured by properly setting the radiation rate of the object or by coating a black paint or attaching a black tape on the measurement position of the object.

In addition, since the temperature of external air may exert an influence upon the surface temperature of the object, it is preferred to properly correct detected temperature information based on the temperature of the external air. Further, in order to correct the error caused by the variation of the distance between the radiation thermometer and the object upon the temperature measurement, a plurality of induction lights are irradiated at various angles in such a manner as to intersect with each other at a predetermined distance from the mirror, and the measured distance can be visually recognized based on the mirror image of the object on which the intersection of the induction lights is projected.

Furthermore, when the detection of the infrared ray is interrupted due to the blockade of the field of view caused by an obstacle located in front of the radiation thermometer, it is preferred to form a hole or a slit having a predetermined size in the obstacle such that the infrared ray radiated from the object may reach the light incident surface of the radiation thermometer through the hole or the slit.

Hereinafter, the mirror structure according to the present invention will be described. The description about the mirror for measuring the temperature according to the present invention may be applicable for the mirror structure.

The mirror structure according to the present invention includes the mirror for reflecting the object thereon and the radiation thermometer for measuring the temperature of the object, wherein the mirror reflects the mirror image of the object located in front of the mirror on the mirror surface of the mirror in a state that the mirror image includes a portion corresponding to the field of view of the radiation thermometer, and the radiation thermometer has the field of view directed to the object located in front of the mirror.

That is, as described above, the mirror for measuring the temperature according to the present invention includes the radiation thermometer installed in a predetermined portion of the mirror directly or by using a mounting member. However, the mirror structure of the present invention may not be limited to the structure in which the radiation thermometer is installed in the mirror. For instance, the radiation thermometer may be separated from the mirror in such a manner that the radiation thermometer can be installed in a support member, such as wall or a pillar, located remote from the mirror.

### EFFECT OF THE INVENTION

The present invention having the above structure can measure the temperature of the object by using the radiation thermometer while reflecting the object on the mirror. When the object is reflected on the mirror, the field of view of the radiation thermometer is directed toward the object. Thus, when the user measures the temperature of the object positioned out of the field of view of the user, for instance, when the user measures the temperature of a face of the user, such as a forehead or a cheek of the user, the user can measure the temperature in a state that the field of view of the radiation thermometer is accurately directed to the object.

In addition, the user may frequently stand in front of the mirror in daily life for the purpose of working, such as face-washing, hand-washing, teeth-brushing, shaving, haircutting, dressing, cloth-changing, or cloth-checking. In addition, the above working may be periodically carried out. Thus, if the body temperature of the user is measured when the user performs the above working in front of the mirror, the body temperature data in daily life can be periodically acquired.

Further, since the radiation thermometer can measure the temperature of the object without making contact with the object, the user can measure the body temperature without stopping the work in front of the mirror.

### BRIEF DESCRIPTION OF THE DRAWINGS

FIG. 1 is a perspective view showing a mirror for measuring the temperature according to the first embodiment of the present invention.
FIG. 2 is a sectional view showing the structure of a radiation thermometer.
FIG. 3 is a block diagram showing the structure of a mirror for measuring the temperature according to the first embodiment of the present invention.
FIG. 4 is a view for explaining the use of a mirror for measuring the temperature according to the first embodiment of the present invention.
FIG. 5 is a perspective view showing a mirror for measuring the temperature according to the second embodiment of the present invention.
FIG. 6 is a block diagram showing the structure of a mirror for measuring the temperature according to the second embodiment of the present invention.
FIG. 7 is a view for explaining the use of a mirror for measuring the temperature according to the second embodiment of the present invention.
FIG. 8 is a perspective view showing a mirror for measuring the temperature according to the third embodiment of the present invention.
FIG. 9 is a block diagram showing the structure of a mirror for measuring the temperature according to the third embodiment of the present invention.
FIG. 10 is a view for explaining the use of a mirror for measuring the temperature according to the third embodiment of the present invention.

### EMBODIMENTS FOR CARRYING OUT THE INVENTION

Hereinafter, embodiments of the present invention will be described with reference to the accompanying drawings. However, it should be noted that the present invention is not limited to the following embodiments.

### (First Embodiment)

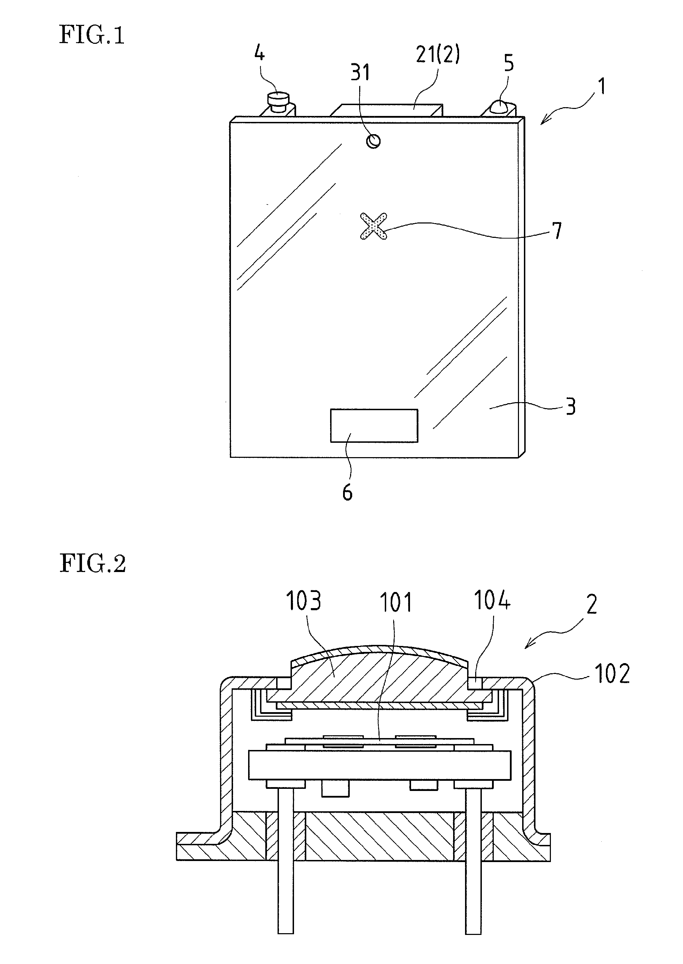

FIG. 1 is a perspective view showing a mirror 1 for measuring the temperature according to the first embodiment of the present invention. The mirror 1 for measuring the temperature includes a mirror 3 and a radiation thermometer 2.

The mirror 3 is a wall mirror and the radiation thermometer 2 is an infrared radiation thermometer that detects an amount of energy of the infrared ray radiated from the object as temperature information.

The radiation thermometer 2 is schematically shown in FIG. 2. The radiation thermometer 2 includes an infrared detecting device 101, a package 102 for receiving the infrared detecting device 101 therein, and an infrared lens 103 to focus the infrared ray onto a light incident surface of the infrared detecting device 101. The package 102 is provided at a predetermined portion thereof, which corresponds to a forward area of the light incident surface of the infrared detecting device 101, with a window part 104 and the infrared lens 103 is fixed to the package 102 to cover the window part 104. The radiation thermometer 2 is installed in a casing 21 in a state that the infrared lens 103 is exposed to the outside.

The casing 21 is provided at the upper center portion of a rear surface of the mirror 3. A perforation hole 31 is formed at the upper center portion of the mirror 3, and the field of view of the radiation thermometer 2 is directed to the object located in front of the mirror 3 through the perforation hole 31.

A switch serving as a manipulation unit 4 for generating the command to execute or stop the temperature measurement is provided at the upper left portion of the rear surface of the mirror 3, and a buzzer 5 serving as a notifying device 5 is provided at the upper right portion of the rear surface of the mirror 3. In addition, a liquid crystal display in the form of a magic mirror serving as a measured temperature displaying unit 6 is provided at the lower center portion of the front surface of the mirror 3. Further, a mark 7 (X-mark) serving as a reference for the measurement position is formed on a region slightly above the center portion of the mirror 3 by the sand blast process.

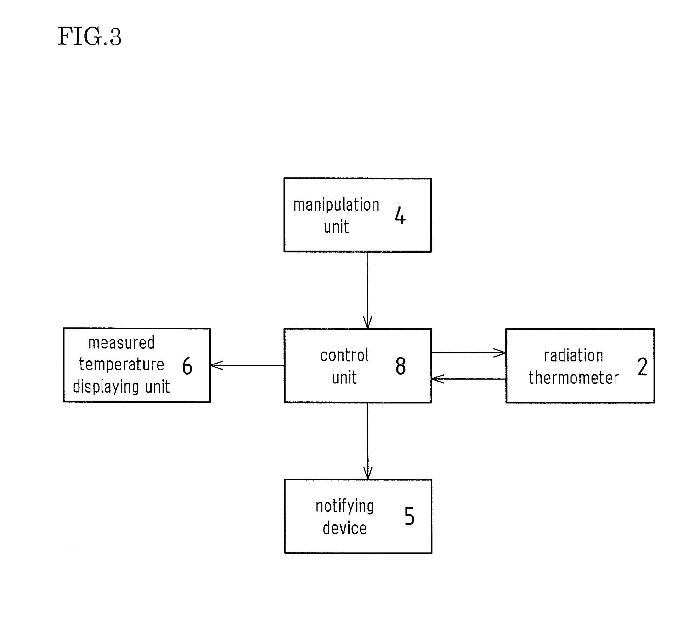

As shown in FIG. 3, in the mirror 1 for measuring the temperature, the radiation thermometer 2, the manipulation unit 4, the measured temperature displaying unit 6 and the notifying device 5 are controlled by a control unit 8.

Upon receiving the command for starting the temperature measurement from the manipulation unit 4, the control unit 8 sends a signal to the radiation thermometer 2 to start the temperature measurement. In addition, the radiation thermometer 2 that receives the signal from the control unit 8 detects the infrared ray radiated from the object and outputs a detection signal having intensity according to the amount of energy of the infrared ray to the control unit 8. As the detection signal is received in the control unit 8, the control unit 8 calculates the temperature of the object based on the average value of the amount of energy of the infrared ray per unit time represented by the detection signal. Information about the calculated temperature is sent to the measured temperature displaying unit 6 and displayed on the mirror surface using the liquid crystal as the backlight unit is turned on. In addition, the control unit 8 is equipped with a memory card serving as a measured temperature recording unit (not shown) and the information about the calculated temperature is stored in the memory card. Further, the control unit 8 can establish and memorize the reference temperature and send a command to the notifying device 5 to generate an alarm sound when the calculated temperature is out of the range of the reference temperature.

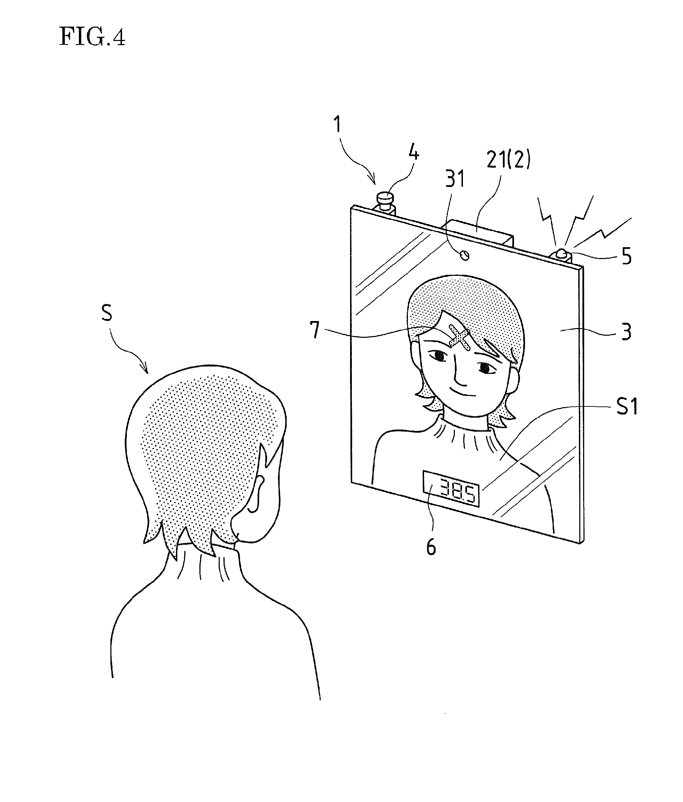

FIG. 4 is a view for explaining the use of the mirror 1 for measuring the temperature. The user S, which is the object to be measured, stands on a predetermined position in front of the mirror 3 in reliance on the mark 7 formed on the mirror surface (in this case, the user S stands on the position where the center of the forehead of the user S in a mirror image S1 overlaps with the mark 7). Then, the user S manipulates the switch (manipulation unit 4) to start the temperature measurement by using the radiation thermometer 2. The measured temperature is displayed on the liquid crystal display (measured temperature displaying unit 6) using the liquid crystal, and, at the same time, recoded in the memory card (measured temperature recording unit). If the measured temperature is out of the predetermined range of the reference temperature (for instance, 36°C to 37°C), the buzzer (notifying device 5) generates an alarm sound.

### (Second Embodiment)

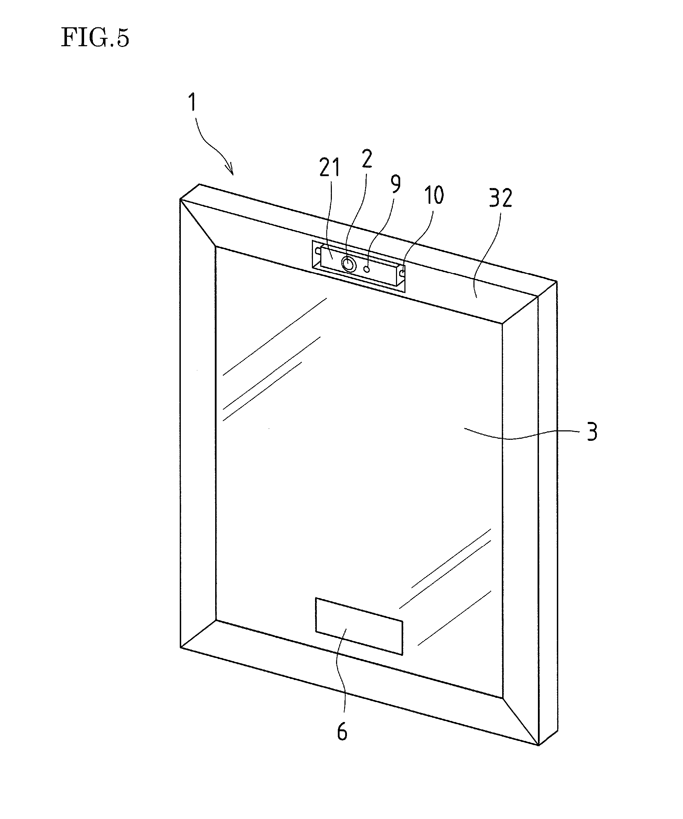

FIG. 5 shows a mirror 1 for measuring the temperature according to another embodiment of the present invention. The mirror 1 for measuring the temperature includes a mirror 3 and a radiation thermometer 2.

The mirror 3 is a wall mirror having a mirror rim 32, and the radiation thermometer 2 is identical to that of the first embodiment.

The casing 21 is provided therein with the radiation thermometer 2 and a laser pointer serving as an induction light irradiation device 9 is installed adjacent to the radiation thermometer 2 in the casing 21. The direction of the induction light (laser beam having a wavelength of a visible ray band) irradiated from the laser pointer serving as the induction light irradiation device 9 may match with the direction of the field of view of the radiation thermometer 2. Meanwhile, for the purpose of safety, the power of the induction light irradiated from the laser pointer serving as the induction light irradiation device 9 is weakly set as to the level of class 1 (based on the class classification of JIS C 6802 revised in 2005).

The casing 21 is provided at the upper center portion of the front surface of the mirror rim 32. Meanwhile, the casing 21 is rotatably installed in the mirror rim 32 by a rotating shaft 10. The liquid crystal display in the form of the magic mirror serving as the measured temperature displaying unit 6 is provided at the lower center portion of the front surface of the mirror 3.

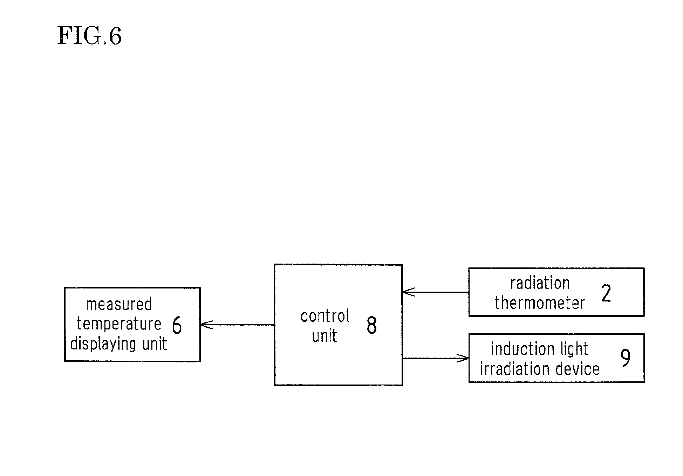

As shown in FIG. 6, in the mirror 1 for measuring the temperature, the radiation thermometer 2, the induction light irradiation device 9 and the measured temperature displaying unit 6 are controlled by the control unit 8.

The radiation thermometer 2 may have the function of a temperature sensor serving as a detecting device. The radiation thermometer 2 continuously detects the infrared ray from the outside and outputs the detection signal having intensity according to the amount of energy of the infrared ray to the control unit 8. If existence of the object in front of the mirror 3 is detected based on variation of the detection signal, the control unit 8 sends a command to the induction light irradiation device 9 to irradiate the induction light. In addition, the control unit 8 calculates the temperature of the object based on the average value of the amount of energy of the infrared ray per unit time represented by the detection signal. Information about the calculated temperature is sent to the measured temperature displaying unit 6 and displayed on the mirror surface using the liquid crystal as the backlight unit is turned on. In addition, the control unit 8 is equipped with a memory card serving as a measured temperature recording unit (not shown) and the information about the calculated temperature is stored in the memory card.

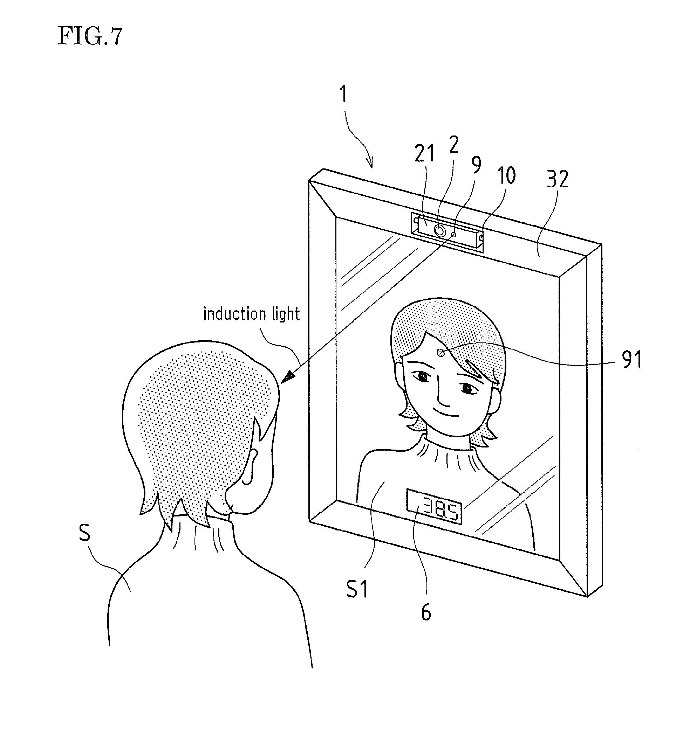

FIG. 7 shows the use of the mirror 1 for measuring the temperature. If the user S, which is the object to be measured, stands on the position in front of the mirror 3, the existence of the user S is detected so that the induction light is irradiated toward the user S. The user S, which is the object to be measured, stands on a predetermined position in front of the mirror 3 in reliance on the mirror image S1 of the user S on which a spot 91 of the induction light is projected (in this case, the user S stands on the position where the spot 91 of the induction light projected on the center of the forehead of the user S is confirmed by the mirror image S1). In addition, if the induction light deviates from the target point due to the physique of the user S, the user S can adjust the direction of the induction light by rotating the casing 21 while seeing the mirror image S1 such that the spot 91 of the induction light can be projected onto the center of the forehead of the user S. The automatically measured temperature is displayed on the liquid crystal display (measured temperature displaying unit 6) in the mirror surface using the liquid crystal, and, at the same time, recoded in the memory card (measured temperature recording unit).

### (Third Embodiment)

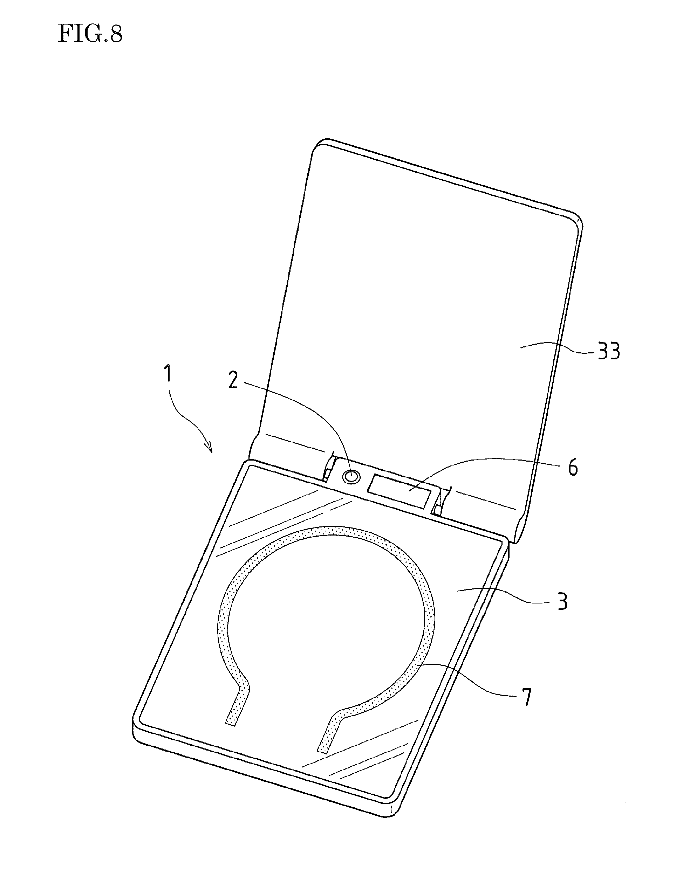

FIG. 8 shows a mirror 1 for measuring the temperature according to still another embodiment of the present invention. The mirror 1 for measuring the temperature includes a mirror 3 and a radiation thermometer 2.

The mirror 3 is a hand mirror and a cover 33 covering the mirror surface in ordinary times is rotated to expose the mirror surface in use. The radiation thermometer 2 is identical to that of the first embodiment.

The radiation thermometer 2 is installed to a hinge used for rotating the cover 33. In addition, a liquid crystal display serving as the measured temperature displaying unit is installed to the hinge in adjacent to the radiation thermometer 2. Further, a mark 7 (outline) serving as a reference for the measurement position is formed on the surface of the mirror 3 by the sand blast process.

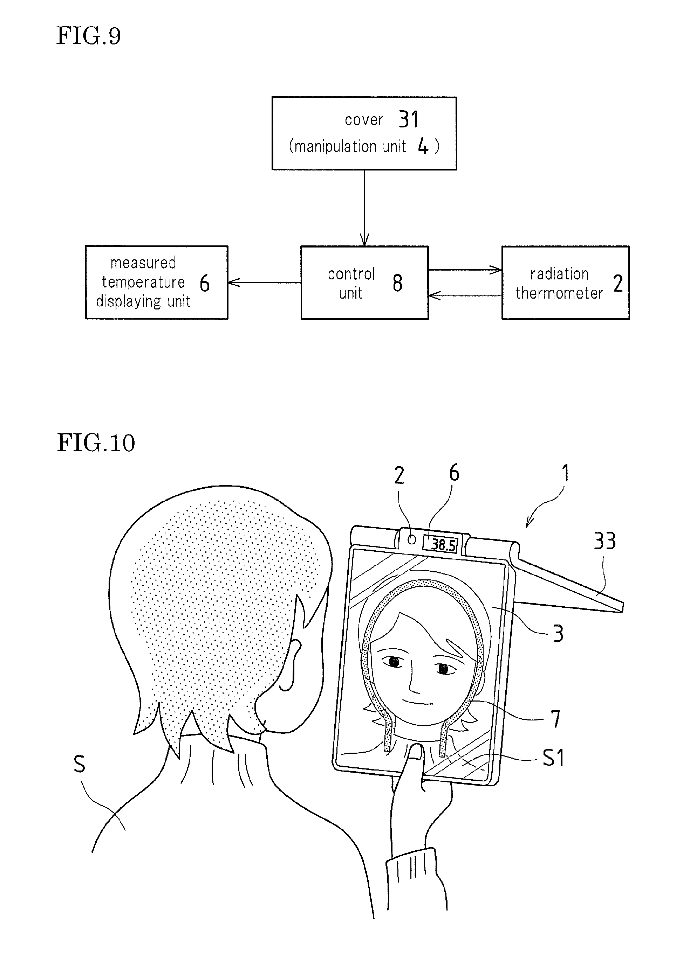

As shown in FIG. 9, in the mirror 1 for measuring the temperature, the radiation thermometer 2, the measured temperature displaying unit 6 and the cover 33 are controlled by the control unit 8.

The cover 33 has the function of the manipulation unit 4 that generates the command to execute/stop the temperature measurement by the radiation thermometer 2. If the cover 33 is rotated to expose the mirror surface, the control unit 8 receives information about the rotation of the cover 33 and sends the command to the radiation thermometer 2 to start the temperature measurement. Upon receiving the command from the control unit 8, the radiation thermometer 2 detects the infrared ray radiated from the object and outputs a detection signal having intensity according to the amount of energy of the infrared ray to the control unit 8. The control unit 8 calculates the temperature of the object based on the average value of the amount of energy of the infrared ray per unit time represented by the detection signal. Information about the calculated temperature is sent to the measured temperature displaying unit 6 and displayed by using the liquid crystal.

FIG. 10 shows the use of the mirror 1 for measuring the temperature. The user S, which is the object to be measured, exposes the mirror surface by rotating the cover 33 and reflects the face of the user S on a predetermined position of the mirror in reliance on the mark 7 formed on the mirror surface (in this case, the user S reflects the face on the mirror surface such that the face in the mirror image S1 is defined within the outline serving as the mark 7). The temperature measured by the radiation thermometer 2 is displayed on the liquid crystal display screen (measured temperature display unit 6) using the liquid crystal.

### INDUSTRIAL APPLICABILITY

The mirror and the radiation thermometer for measuring the temperature according to the present invention can be suitably used at home as well as in public facilities, such as schools, institutions and hospitals.

## Claims

1. A mirror comprising a radiation thermometer for measuring a temperature of an object, wherein the mirror reflects a mirror image of the object located in front of the mirror on a mirror surface of the mirror in a state that the mirror image includes a portion corresponding to a field of view of the radiation thermometer, the radiation thermometer has the field of view directed to the object located in front of the mirror, and the temperature of the object is measured while reflecting the object on the mirror.

2. The mirror of claim 1, further comprising an induction light irradiation device for irradiating induction light in a direction of the field of view of the radiation thermometer, wherein the mirror image of the object including a portion to which the induction light is irradiated is reflected on the mirror surface, so the field of view of the radiation thermometer is recognized.

3. The mirror of claim 1 or 2, wherein a mark serving as a reference of the field of view of the radiation thermometer is temporally or continuously displayed on the mirror surface.

4. The mirror of one of claims 1 to 3, wherein the radiation thermometer is provided on the mirror such that a direction of the field of view of the radiation thermometer is changeable.

5. The mirror of one of claims 1 to 4, further comprising a measured temperature recording unit for recording the temperature measured by the radiation thermometer.

6. The mirror of one of claims 1 to 5, further comprising a measured temperature displaying unit for displaying the temperature measured by the radiation thermometer.

7. The mirror of one of claims 1 to 6, further comprising a notifying device, which generates a signal when the temperature measured by the radiation thermometer is higher or less than a predetermined temperature range, which is set as a reference temperature.

8. The mirror of one of claims 1 to 7, further comprising a detecting device for detecting existence of the object.

9. A mirror structure comprising a mirror for reflecting an object thereon and a radiation thermometer for measuring a temperature of the object, wherein the mirror reflects a mirror image of the object located in front of the mirror on a mirror surface of the mirror in a state that the mirror image includes a portion corresponding to a field of view of the radiation thermometer, and the radiation thermometer has the field of view directed to the object located in front of the mirror.
